# EUROPEAN PATENT APPLICATION

(11) **EP 3 514 570 A1**
(43) Date of publication of application: **24.07.2019**
(21) Application number: 16916237.7
(22) Date of filing: 15.09.2016
(51) Int. Cl.: G01S 7/52, G01S 7/521, G01S 7/524, G01S 7/62

(54) **ULTRASONIC THREE-DIMENSIONAL MEASUREMENT APPARATUS**

(71) Applicant: National Institute of Maritime, Port and Aviation Technology, Tokyo 181-0004 (JP); Katakura, Kageyoshi, Tokyo 153-0065 (JP)
(72) Inventor: KATAKURA, Kageyoshi, Tokyo 153-0065 (JP); MATSUMOTO, Sayuri, Yokosuka-shi, Kanagawa 239-0826 (JP); SATO, Tomoo, Yokosuka-shi, Kanagawa 239-0826 (JP); ABUKAWA, Kazuki, Yokosuka-shi, Kanagawa 239-0826 (JP)
(74) Representative: Viering, Jentschura & Partner mbB Patent- und Rechtsanwälte
(86) International application number: PCT/JP2016/077239
(87) International publication number: WO 2018/051455

(57) **Abstract**

To provide a system for implementing a three-dimensional measurement apparatus based on ultrasonic signals that have high applicability and high resolution with a simple configuration. The present invention provides a high-resolution apparatus with high applicability with a simple configuration by using low-resolution, wide field-of-view display and high-resolution region-limited display in parallel in a configuration that separates a one-dimensional direction by frequency.

## Description

### Technical Field

The present invention relates to an image acquisition apparatus, and to a three-dimensional imaging apparatus that transmits acoustic signals in water such as a sea and acquires a three-dimensional image of a wide space via reflected waves from a target object irrespective of the turbidity and/or illuminance of the water.

### Background Art

For implementation of three-dimensional imaging, it is basically necessary to position electrodes two-dimensionally in a matrix, and for implementation of a high-resolution apparatus, a large number (around 10,000) electrodes are required, which is extremely difficult to put into practical use.

The present inventors thus have developed a three-dimensional imaging system having a transmitter of a one-dimensional array that emits ultrasonic waves in directions that are different per frequency and a one-dimensionally segmented receiver in a direction orthogonal to the transmitter arrangement direction.

Various systems for achieving three-dimensional imaging by emitting ultrasonic waves in different directions per frequency are known.

A known example by a method that emits ultrasonic waves in different directions per frequency by scanning emission is shown in FIG. 1. This system is shown in Patent Literature 1 by the present inventors.

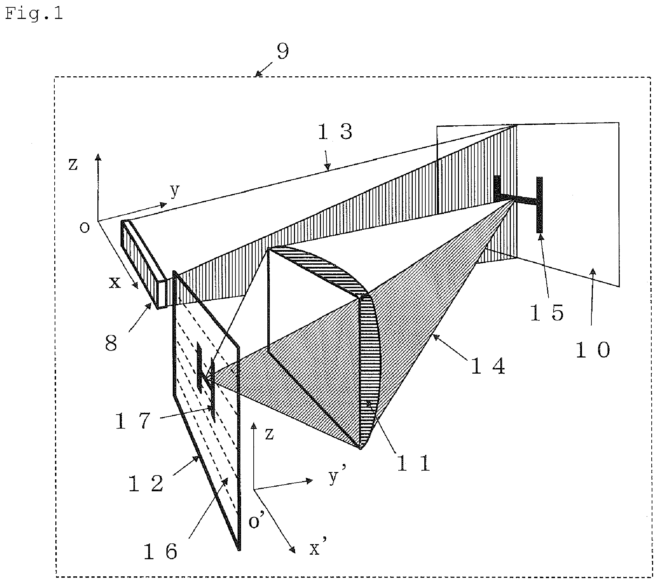

A transmitter 8 in FIG. 1 sends ultrasonic waves of different frequencies per azimuth. The simplest configuration of the transmitter 8 is a known technique by the present inventors, shown in Patent Literature 2.

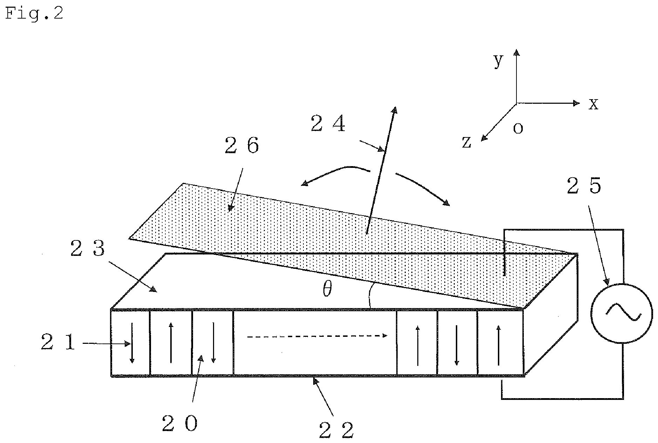

The transmitter 8 in accordance with this known technique has a pair of a ground electrode 22 and a signal electrode 23 as common electrodes formed on the opposite surfaces of a piezoelectric element 20 in which a polarization axis direction 21 is formed so as to alternately invert, as shown in FIG. 2.

When a driving signal 25 is applied between the common electrodes 22, 23, an ultrasonic wave front 26 is radiated in a varying direction within a propagation medium 9 depending on the frequency of the signal and a target region 10 is scanned in the x-axis direction.

As the transmitter 8 has a rod-like shape, the ultrasonic wave front 26 forms a fan ultrasound beam 13 being narrow in the x-axis direction and wide in the z-axis direction, as shown in FIG. 1.

In the present example, the direction in which the ultrasonic wave front 26 propagates is regarded as an ultrasonic wave front radiation direction 24. Hereinbelow, the angle of inclination of the ultrasonic wave front 26 relative to the x-axis (the arrangement direction of the transmitter 8) is represented as θ and the angle of inclination relative to the z-axis (assumed to be the vertical direction) is represented as ψ.

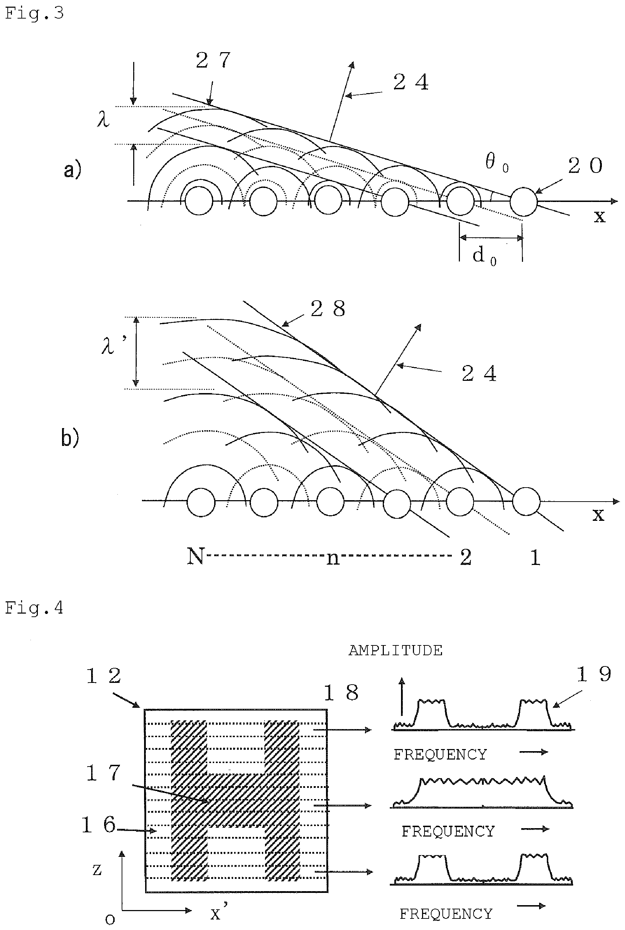

The principle of operation of the transmitter 8 is illustrated in FIG. 3. When a sinusoidal driving signal 25 is applied between the common electrodes 22 and 23, wave fronts depicted as arcs in FIG. 3 are formed (a solid line and a broken line indicate a phase difference of 180 degrees). Since the phases of neighboring wave fronts at the same point in time are inverted from each other, radiated sound waves are canceled in the normal direction of the transmitter 8 and an ultrasound beam is formed in the ultrasonic wave front radiation direction 24, which is an inclined direction.

In FIG. 3, since the wavelength is short when the frequency is high, high-frequency outgoing wave fronts 27 are formed in a near-front direction as shown at a) in FIG. 3. In contrast, since the wavelength is long when the frequency is low, low-frequency outgoing wave fronts 28 are formed in a further inclined direction as shown at b) in FIG. 3.

Meanwhile, a reflected sound wave 14 from a target object 15 is imaged on a received wave detection surface 12 of a one-dimensional arrangement, which has electrodes segmented in the z-axis direction (the vertical direction) as shown in FIG. 4, by a two-dimensional converging acoustic lens 11 for wave reception, forming an object image 17.

In the configuration of FIG. 1, the z-direction position of the target object 15 is known from the position of a segmented element 16 on the received wave detection surface 12.

The horizontal position of the target object 15 is known from a signal frequency component strength 19 in an element output signal 18 as shown in FIG. 4 because the frequency of the signal emitted varies depending on the azimuth θ of the target object 15 (the angle of its inclination relative to the x-axis direction).

Also, the distance to the target object 15 is known from the sound wave propagation time, so that three-dimensional information for the target object 15 can be obtained.

Here, it is possible to produce shortened pulses by means of aperture segmentation as shown by Patent Literature 3 in a configuration based on such a transmitter; however, the transmitted pulse length would be basically long due to the principle of operation in FIG. 3, leading to lower distance resolution.

Thus, the present invention provides a three-dimensional imaging system with high distance resolution that employs a receiver in one-dimensional arrangement and an orthogonally arranged configuration that separates a one-dimensional direction by frequency.

### Citation List

### Patent Literature

Patent Literature 1: Japanese Patent Publication No. 52-47697
Patent Literature 2: Japanese Patent Laid-Open No. 47-26160
Patent Literature 3: Japanese Patent Laid-Open No. 2010-71967

### Non Patent Literature

Non Patent Literature 1: Marine Acoustics Society of Japan, "Fundamental and Application of Marine Acoustics", Seizando, 2004

### Summary of Invention

### Technical Problem

The present invention provides a three-dimensional imaging system having high distance resolution.

### Solution to Problem

The present invention provides a three-dimensional imaging system that provides high distance resolution with a one-dimensionally arranged transmitter and a one-dimensionally arranged receiver by performing transmission in short pulses in a configuration that separates a one-dimensional direction by frequency.

### Advantageous Effects of Invention

The present invention improves the distance resolution and enables an increased resolution of an ultrasonic imaging apparatus for three-dimensional imaging.

### Brief Description of Drawings

FIG. 1 is an illustrative diagram showing a known example.
FIG. 2 is an illustrative diagram showing a transmitter according to a known example.
FIG. 3 is an illustrative diagram showing the principle of operation of the transmitter according to the known example.
FIG. 4 is an illustrative diagram showing a situation of a receiver surface according to a known example.
FIG. 5 is an illustrative diagram showing an overall configuration of the present invention.
FIG. 6 is an illustrative diagram showing formation of outgoing wave fronts according to the present invention (Embodiment 1).
FIG. 7 is an illustrative diagram showing simultaneous formation of multiple outgoing wave fronts according to the present invention.
FIG. 8 is an illustrative diagram showing simultaneous formation of multiple outgoing wave fronts in all directions according to the present invention.
FIG. 9 is an illustrative diagram showing simultaneous formation of multiple outgoing wave fronts in all directions in a reduced time according to the present invention (Embodiment 2).
FIG. 10 is an illustrative diagram showing an example of transmission waveform.
FIG. 11 is an illustrative diagram showing an example of the frequency spectrum of transmission waveform.
FIG. 12 is an illustrative diagram showing a limit number of wave fronts Uw that can be transmitted simultaneously.
FIG. 13 is an illustrative diagram showing operations of multiple transmission (shown for two transmissions) (Embodiment 3).
FIG. 14 is an illustrative diagram showing the number of wave fronts KUw with multiple transmissions.
FIG. 15 is an illustrative diagram showing limit imaging time TFK with multiple transmissions.
FIG. 16 is an illustrative diagram showing a transmission configuration with concavity convergence (Embodiment 4).
FIG. 17 is an illustrative diagram showing a receiver and a reception directivity synthesis unit (Embodiment 5).
FIG. 18 is an illustrative diagram showing the reception directivity synthesis unit and a filter set.
FIG. 19 is an illustrative diagram showing a situation of display with a basic configuration.
FIG. 20 is an illustrative diagram showing a situation of display with low-resolution display.
FIG. 21 is an illustrative diagram showing a situation of display with ψ-direction display.
FIG. 22 is an illustrative diagram showing a situation of ultrafast display with ψ-direction display.
FIG. 23 is an illustrative diagram showing a situation of display with θ-direction display.
FIG. 24 is an illustrative diagram showing a situation of display with cross display.
FIG. 25 is an illustrative diagram showing a situation of display with depth gate display.
FIG. 26 is an illustrative diagram showing a situation of display with region-of-interest display.
FIG. 27 is an illustrative diagram showing cursor display.
FIG. 28 is an illustrative diagram showing a superposed display of low-resolution display and cross display or cursor display.
FIG. 29 is an illustrative diagram showing triple juxtaposed display combining low-resolution display, cursor display, and cross display.
FIG. 30 is an illustrative diagram showing triple juxtaposed display combining low-resolution display, cursor display, and region-of-interest display.
FIG. 31 is an illustrative diagram of composite display combining double superposed display of low-resolution display and cross display with region-of-interest display.
FIG. 32 is an illustrative diagram showing automatic depth gate display.
FIG. 33 is an illustrative diagram showing a method of performing transmission focused at distance F1.
FIG. 34 is an illustrative diagram showing a method of transmitting wave fronts of the same frequency in multiple neighboring directions.
FIG. 35 is an illustrative diagram showing a method of applying amplitude weighting to the whole aperture of a receiver.
FIG. 36 is an illustrative diagram showing a method of using the whole aperture of a receiver with segmentation of the aperture.

### Description of Embodiments

Various configurations that enable an increased resolution are described in detail below with reference to embodiments.

### (Embodiment 1) Delayed control driving of a one-dimensional transmission arrangement (frequency positioning and high frequency in front-direction)

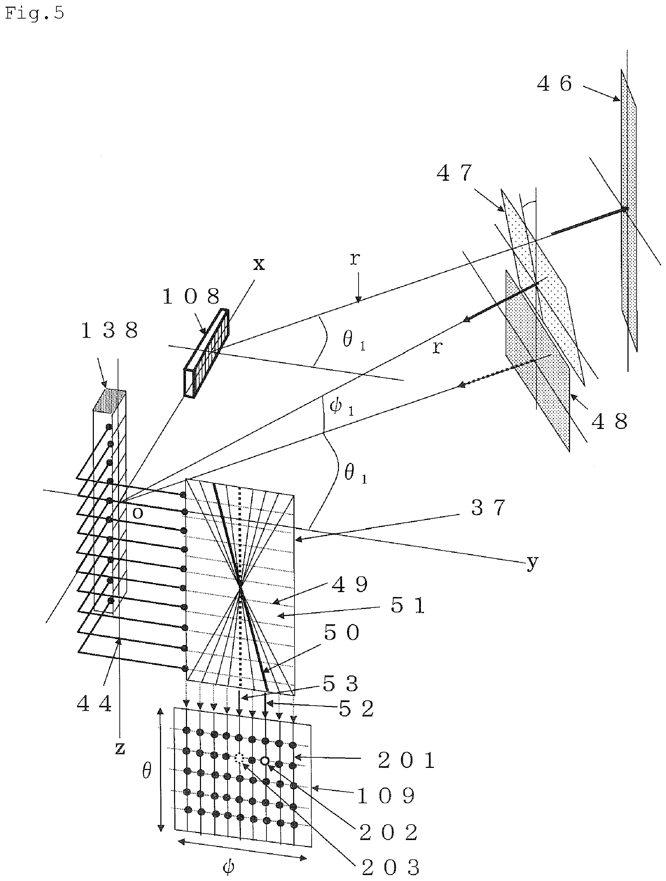

An overall configuration of this embodiment is shown in FIG. 5.

Operations of a transmission directivity synthesis process for forming θ-direction resolution, which represents the transmitter resolution, of this embodiment are shown below.

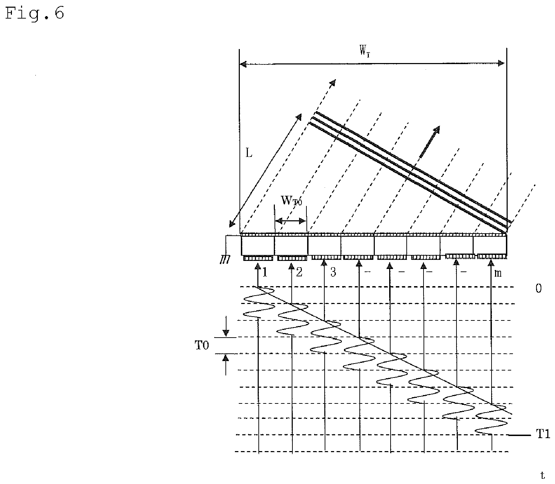

A transmitter 108 according to the present invention shown in FIG. 5 has a total aperture of W_{T}, and applies the same waveforms with time difference T0 to the respective transmitting elements as shown in FIG. 6, thereby sending a sound wave in the direction that is determined by element interval W_{T0} and the time difference T0 as is well known.

Since the transmitter 108 has a shape being wide in the x-direction and narrow in the z-direction, it forms an emitted wave front 46 of a reverse shape, i.e., wide in the z-direction and narrow in the x-direction.

The x-direction width of the emitted wave front 46 with the transmitter 108 represents the transmitter resolution, and a transmitter limit resolution, which is the highest resolution that can be achieved by the apparatus configuration, is determined by the diffraction limit angle Ω_{DT} of a sound wave, given by the transmitter aperture W_{T}, sound wave wavelength λ_{S}, and the azimuth of emission θ, where Ω_{DT}=λ_{S}/ (W_{T} cos θ).

With the basic configuration of FIG. 6, the imaging rate is low because only a measurement in one direction is carried out via a single transmission and reception.

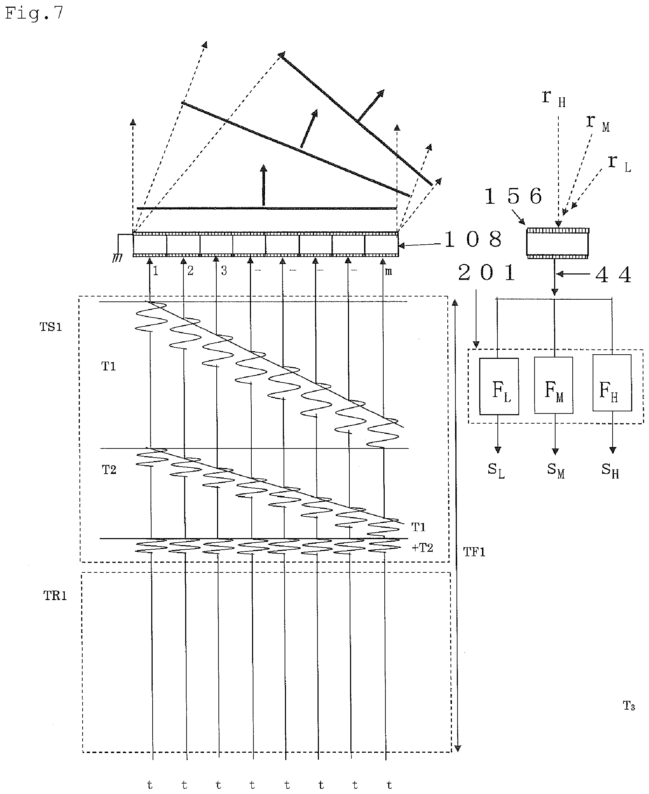

Thus, with the configuration of FIG. 7, waveforms having multiple frequencies called f_{L}, f_{M}, and f_{H} (three in this example) are transmitted with different time differences.

Here, since a driving electronic circuit of the transmitter has a voltage limit, efficient use and configuration of the electronic circuits is achieved by making settings such that the respective waveforms do not temporally overlap as shown in FIG. 7.

When transmission is performed in such a manner, wave fronts having multiple frequencies f_{L}, f_{M}, and f_{H} are transmitted in the different directions corresponding to the respective time differences, and by decomposing a received signal acquired by a receiving element 156, one of the elements of the receiver 138, into individual frequency components through a filter 201, measurement results for multiple directions can be obtained via a single transmission and reception.

When wave fronts having multiple frequencies f_{L}, f_{M}, and f_{H} are thus transmitted in different directions, the intensity of unwanted radiation emitted in an azimuth other than the target azimuth increases as the frequency is higher or the deflection angle is larger. Accordingly, it is effective to have a configuration that radiates a high-frequency signal in the front direction and radiates low-frequency signals in marginal directions as shown in FIG. 7.

By thus transmitting wave fronts having multiple frequencies in different directions respectively and decomposing a received signal from a reflector obtained at a receiving terminal 44 of the receiving element 156, one of the elements of the receiver 138, into individual frequency components through the filter 201, measurement results for multiple directions can be obtained via a single transmission and reception, and the θ-direction position at which each reflector is present is known from the selected frequency of the filter.

In a case where wave fronts having multiple frequencies f_{L}, f_{M}, and f_{H} are transmitted in different directions as shown above, the time required for a single transmission and reception is TF1 as shown in FIG. 7.

Next, a second embodiment with waveform pack driving is described.

### (Embodiment 2) Waveform pack driving (one direction first and shortening of dead time period)

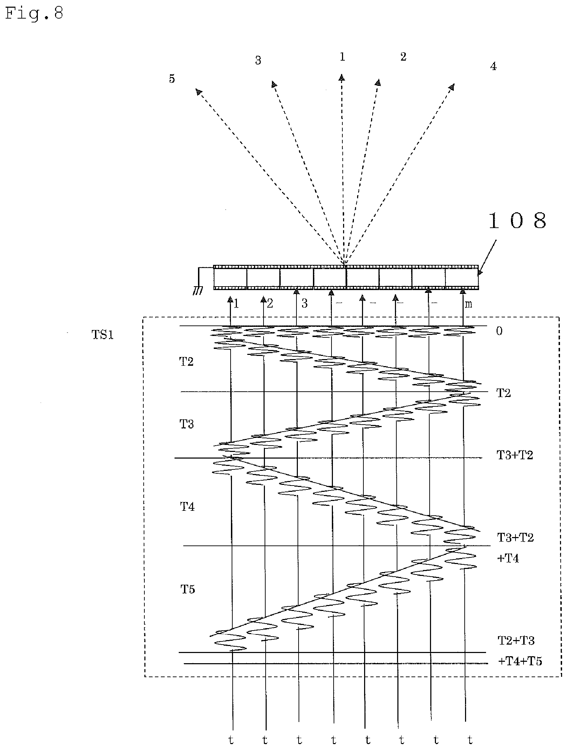

To ensure the full field of view in the configuration of FIG. 7, transmissions with different frequencies are performed in the respective directions on both half surfaces as shown in FIG. 8, for example. The transmission period is the sum of all the gradient delay times (T2+T3+T4+T5), and because reception is difficult during the transmission period, a dead region in the vicinity becomes large.

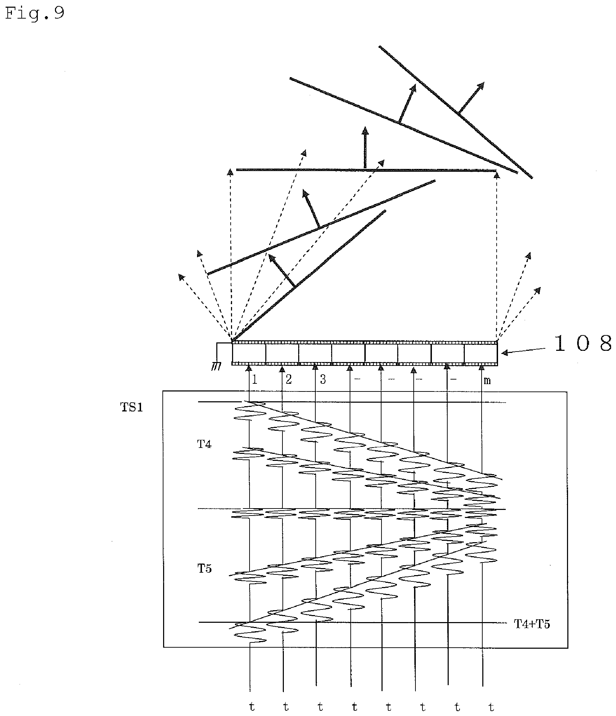

In such a transmission directivity synthesis process, when making settings so as to provide an order that makes the azimuth of the outgoing wave fronts change monotonically as shown in FIG. 9, the dead time will be the sum of only the right and left maximum gradient delay times (T4+T5) and the dead time could be significantly shortened particularly when there are many emission azimuths.

Next, a third embodiment with multiple interleaved transmission is described.

### (Embodiment 3) Multiple interleaved transmission (increased resolution)

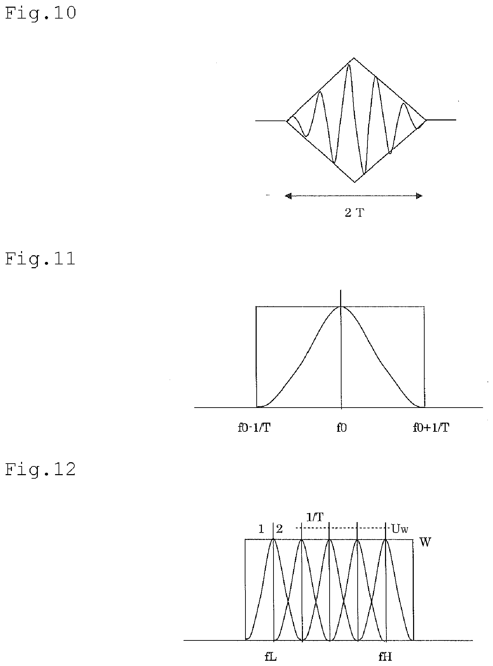

In the transmission directivity synthesis process of FIG. 7, the distance resolution is determined by the time length of a transmitted signal. In the configuration of FIG. 7, when the transmitted signal waveform is the diamond shown in FIG. 10 and the total time length of the transmitted signal is 2T, the frequency spectrum of the transmitted signal is the one shown in FIG. 11 and the frequency bandwidth is 1/T.

Thus, assuming that the frequency band of the transmitter is W in FIG. 12, the maximum number of radiation directions permitted in a single transmission is limited to U_{W}=W/(1/T) directions.

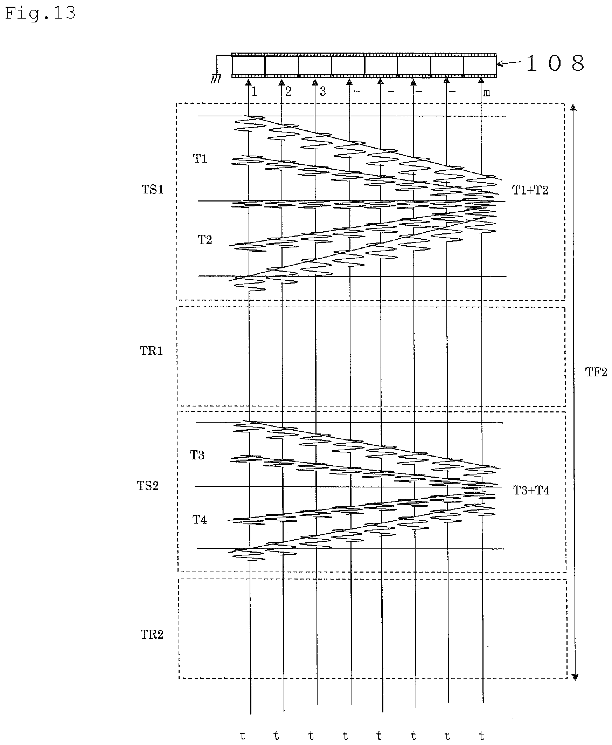

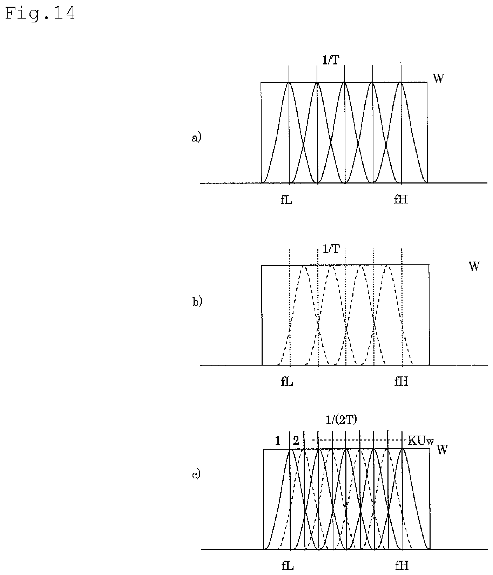

Accordingly, when sound waves are radiated in respectively different directions at a multiple number of transmissions in the transmission directivity synthesis process as shown in FIG. 13, the frequency utilization in each of the transmissions is as shown in FIG. 14 a) and b), and measurements in many directions become possible with the associated received signals as shown in FIG. 14 c).

Thus, by radiating sound waves respectively in different directions at a multiple number of transmissions, independent transmissions and receptions of sound waves in many directions are achieved with the limited frequency band of the transmitter while maintaining sufficient distance resolution.

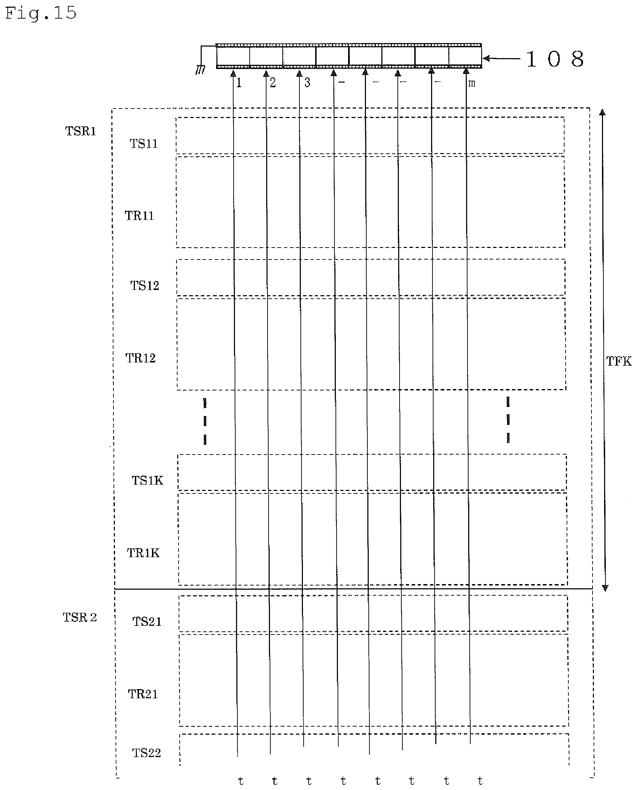

Although FIG. 14 illustrates a case of completing one screen with two rounds of transmission and reception, as will be apparent, a configuration that completes one screen with K rounds of transmission and reception (K being a natural number greater than 2) as shown in FIG. 15 is also possible. In such a configuration, the imaging time TFK for completing one screen would be longer, but independent transmissions and receptions of sound waves in still more directions can be achieved with the limited frequency band of the transmitter while maintaining sufficient distance resolution.

As described above, in the configuration that completes one screen via K rounds of transmission and reception, the imaging time required for completion of one screen is long, and the imaging time is the time TFK required for K rounds of transmission and reception shown in FIG. 15.

Next, a fourth embodiment with concavity convergence is described.

### (Embodiment 4) Concavity convergence

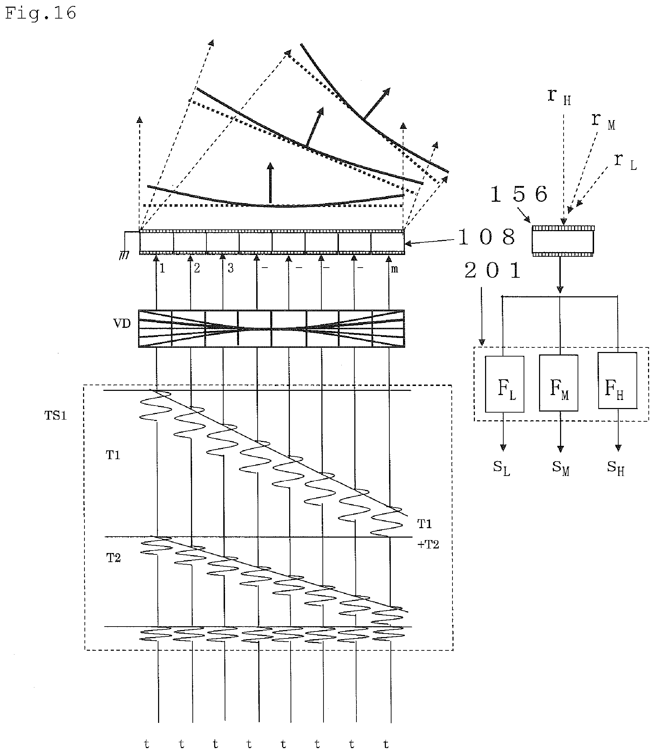

A configuration that prevents reduction in resolution for a short distance is shown in FIG. 16.

This configuration can make the outgoing wave fronts converge to a selected distance by giving a concave delay via a delay circuit VD as shown in FIG. 16.

Next, a fifth embodiment with reception directivity synthesis in the reception arrangement direction is described.

### (Embodiment 5) Reception directivity synthesis in the reception arrangement direction

A reception directivity synthesis process in ψ-direction (the reception arrangement direction), which represents the receiver resolution, of this embodiment is described with reference to the overall configuration of FIG. 5.

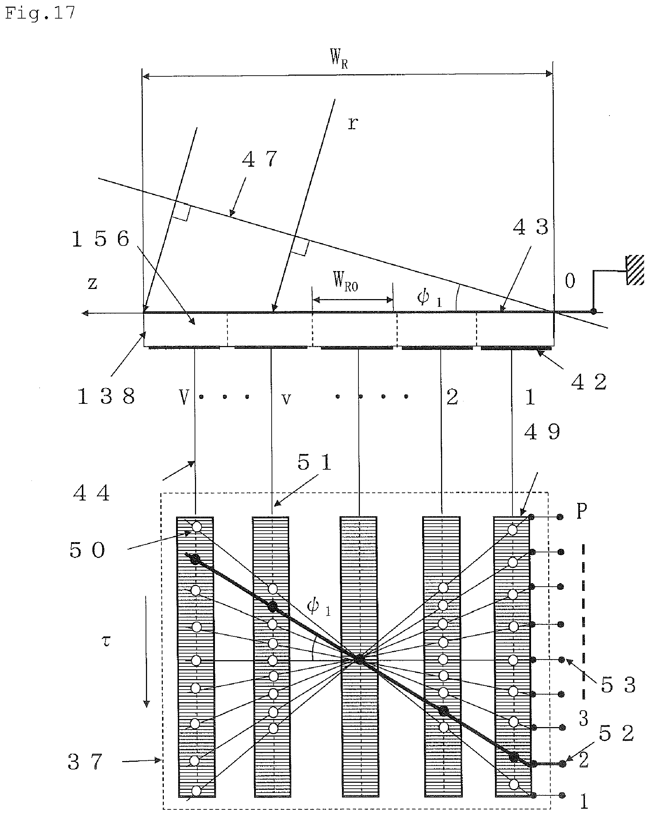

The time of incidence to the receiver 138 in FIG. 5 changes with the z-axis direction position as shown in FIG. 17.

Thus, for performing a same phase addition, a directivity synthesis process relating to the z-axis direction is required for V signals from the receiver 138.

This reception directivity synthesis process, detailed in Non Patent Literature 1, can be carried out by, for example, selecting a delay time terminal 50 of a delay circuit 49 in a reception directivity synthesis unit 37 in accordance with the inclination angle ψ₁ of an upper-received wave front 47 so as to compensate for the time difference or phase difference between signals in received signals 51 and adding the compensated signals.

The z-direction width of received wave fronts 47 and 48 with the receiver 138 represents the receiver resolution, and the receiver limit resolution, or the highest resolution that can be achieved by the apparatus configuration, is determined by the diffraction limit angle Ω_{DR} of a sound wave, given by the receiver aperture W_{R}, the sound wave wavelength λ_{S}, and the azimuth of reception ψ, where Ω_{DR}=λ_{S}/ (W_{R} cos ψ).

Here, by setting the selected position of the delay time terminal 50 as a concave, converged reception targeted for a specific distance becomes possible as well.

With this same phase addition process, the upper-received wave front 47, inclined by angle ψ₁, is output as an upper-received output 52, and the front-direction received wave front 48 is output as a front-received output 53 independently.

Hence, the position associated with ψ-direction is known from P received output positions in the reception directivity synthesis unit 37.

Next, the basic operation for a three-dimensional space measurement target is described.

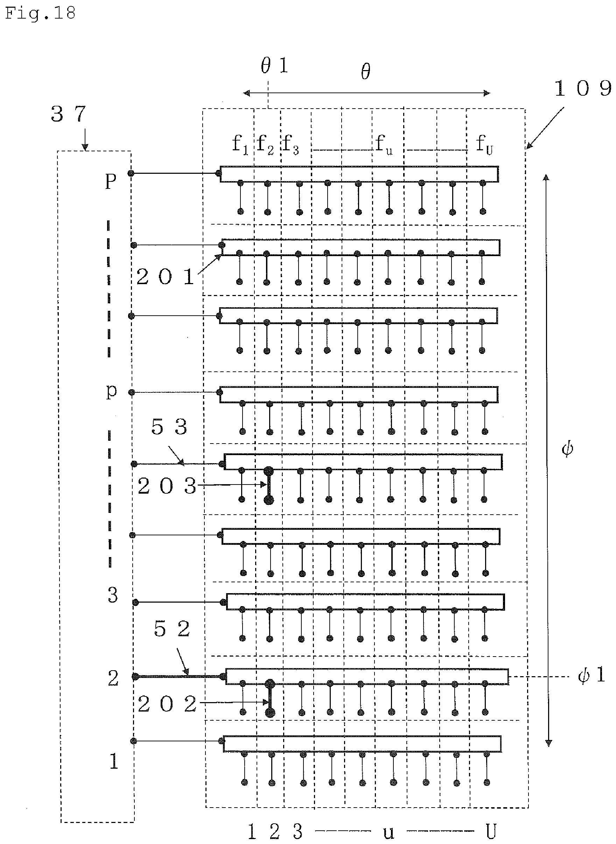

The respective received outputs of the reception directivity synthesis unit 37 corresponding to the ψ-direction position of a reflector described above are applied to a filter set 109 shown in FIG. 18.

The filter set 109 consists of multiple filters 201, and frequency components f₁ through f_{U} are separately output at the terminals of the respective filters 201.

Here, since the θ-direction position at which a reflector is present corresponds to the frequency of a reflected signal therefrom, the θ-direction position of the reflector is known from the terminals of the respective filters 201 which output the respective frequency components separately.

Hence, an upper-received signal and a front-received signal are obtained as an upper-received filtered output 202 and a front-received filtered output 203, and from these output terminal positions, the θ-direction and ψ-direction positions at which the reflector is present can be known.

Also, since a distance r to the target object 15 is known from the round-trip time of an ultrasonic wave, the shape of a measurement target in a three-dimensional space is fully determined from these three pieces of information, thus achieving three-dimensional imaging.

Assuming that the above process needs to be performed for all of the terminals of the filter set 109 and the largest field of view in the θ-direction determined by the transmitter structure is represented by E and the highest resolution is represented by ε, the required number of terminals of the filter set 109 is U=E/ε. Assuming that the largest field of view in the ψ-direction determined by the receiver structure is represented by H and the highest resolution is represented by η, the required number of output terminals of the reception directivity synthesis unit 37 is P=H/η.

Here, where the sound wave wavelength is λ, the largest field of view E in θ-direction determined by the transmitter structure is approximately λ/W_{T0} and the highest resolution ε in θ-direction is λ/W_{T}.

Likewise, the largest field of view H in ψ-direction determined by the receiver structure is approximately λ/W_{R0}, and the highest resolution η in ψ-direction is λ/W_{R0}.

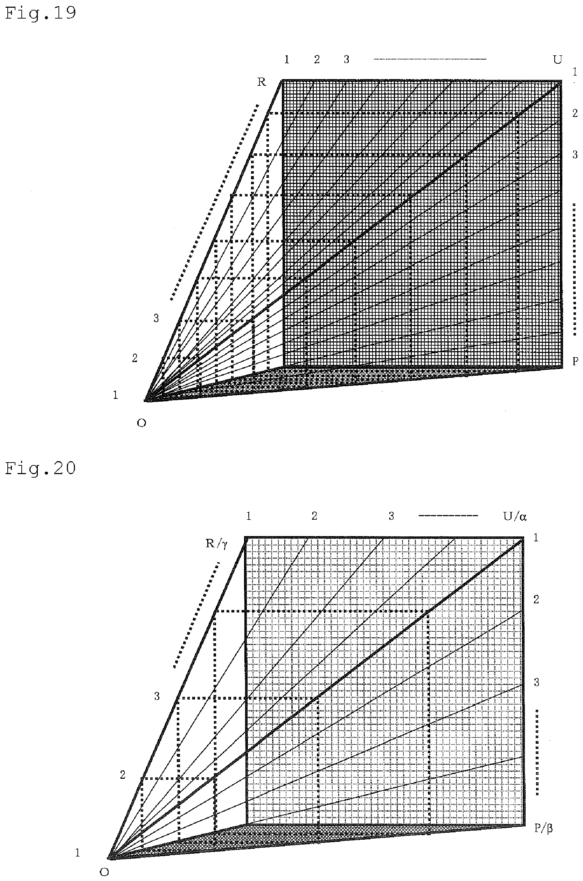

Meanwhile, when the field of view in the distance direction is represented by R and the resolution is represented by ρ, the number of observation points in the distance direction is L=R/ρ. For measuring information on all the observation points in a three-dimensional space through the present basic operation, a U×P×R number of directivity synthesis processes are to be performed as shown in FIG. 19.

Although the reception directivity synthesis process by the reception directivity synthesis unit 37 and the filter set 109 may be performed with analog processing utilizing delay lines or the like, a configuration is also possible that digitizes received signals and carries out the reception directivity synthesis process entirely via numerical operations.

The sound wave propagation time with this basic operation is TFK and it is impossible to reduce the imaging time below it; this TFK gives the imaging limit time.

Here, if the performance of a processing apparatus is not sufficient in the case of performing a U×P×R number of directivity synthesis processes, a processing time TP for directivity synthesis would exceed the imaging limit time TFK required for K rounds of transmission and reception shown in FIG. 15, and the imaging time is determined by the processing time TP (> TFK) .

The above description was given for an order where the respective received outputs of the reception directivity synthesis unit 37 are applied to the filter set 109. However, since these processes are linear processing and thus do not depend on the order of processing, a configuration is also possible in which filtering is performed first and then reception directivity synthesis is done on the result of filtering.

Next, methods of displaying information acquired by the three-dimensional imaging apparatus discussed above are described.

### (Low-resolution display)

For measurement of information on all the observation points at the highest precision, U×P×R directivity synthesis processes are required; however, a configuration with a reduced number of processes is also possible in some use situations.

Accordingly, consider a low-resolution display configuration that intentionally lowers the transmitter resolution or the receiver resolution from their respective limit performances determined by the apparatus aperture and the frequency or further forcefully lowers the distance resolution as well.

Here, as shown in FIG. 20, assuming that the resolutions in the θ-direction, the ψ-direction, and the distance direction are decreased by a factor of α, β, and γ, respectively, the number of directivity synthesis processes will be reduced to (U/α) × (P/β) × (R/γ) at minimum because of decrease in the number of pieces of information for display.

Further, when the resolutions in the θ-direction and ψ-direction are decreased by a factor of α, β, and γ, respectively, the openings of the transmitter and the receiver can be also reduced by a factor of α, β, and γ, respectively.

Hereinbelow, only the effect associated with decrease in the number of pieces of information for display is considered for the sake of simplicity.

Considering even only the effect associated with decrease in the number of pieces of information for display, the number of directivity synthesis processes for measuring information on the observation points is (U/α) × (P/β) × (R/γ); in low-resolution display, the processing burden can be reduced to as low as 1/(α×β×γ), and assuming that α=β=γ=3, the processing burden can be reduced to 1/27.

Here, when the resolution in θ-direction is reduced by a factor of α, the number of transmissions K will be Ka, where KUw > U > KaUw > U/α; the imaging limit time TFK required for K rounds of transmission and reception shown in FIG. 15 is shortened to TFKa, enabling fast imaging as fast as TFK/TFKa times that in the basic operation.

The method of display is not limited to the one described above, but partial data display 1: ψ-direction display is also possible, for example.

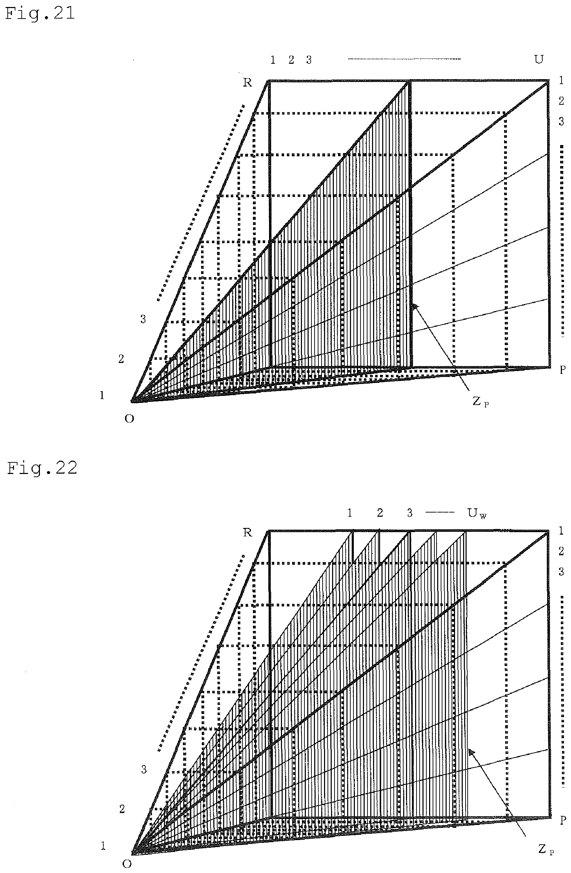

Specifically, considering a case of measuring only one fan cross section in θ-direction, i.e., the transmitter resolution direction, with the highest resolution as shown in FIG. 21, it is equivalent to P×R directivity synthesis processes, and the imaging limit time in sound wave propagation is the time taken for a single transmission and reception shown in FIG. 7, TF1(=TFK/K), enabling ultrafast imaging as fast as K times the basic operation.

Further, partial data display 2: ultrafast display is also possible. Specifically, as for the fan cross section in θ-direction, if the number of cross sections to be measured is within the maximum number of radiation directions Uw permitted for a single transmission (shown in FIG. 12) as illustrated in FIG. 22, the imaging limit time in sound wave propagation remains the time for single transmission and reception TF1(=TFK/K), enabling ultrafast imaging.

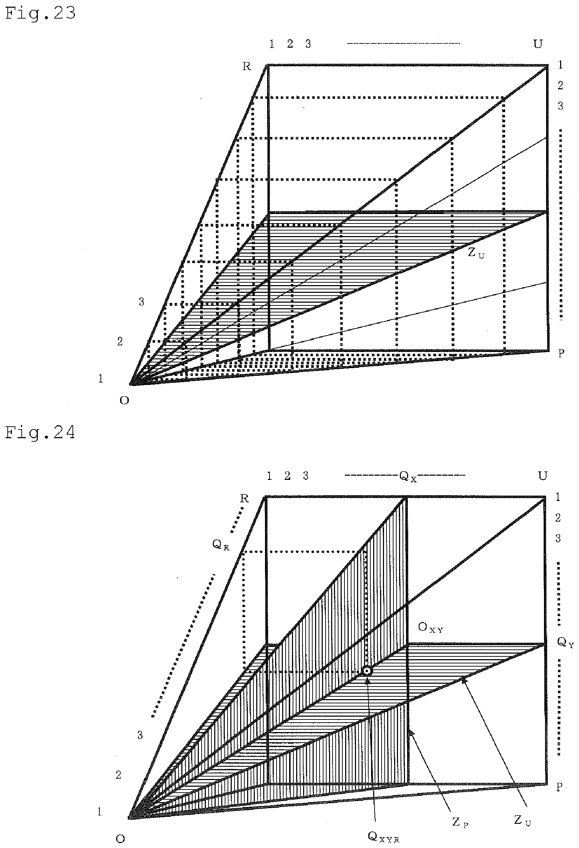

Partial data display 3: θ-direction display is also possible. Here, considering a case of measuring only one fan cross section in ψ-direction, i.e., the receiver resolution direction, with the highest resolution as shown in FIG. 23, it is equivalent to a U×R number of directivity synthesis processes, with the processing burden in directivity synthesis reduced to 1/P. The imaging limit time in this case is the TFK of FIG. 15 and the imaging rate is comparable with that of the basic operation.

When increasing the number of fan cross sections in ψ-direction to Pp as with FIG. 22, it is a P×U×R number of directivity synthesis processes, where the processing burden in directivity synthesis increases in proportion with the number of fan cross sections Pp, but the imaging limit time remains TFK and the imaging rate is comparable with that of the basic operation.

Partial data display 4: cross display is also possible. Cross display refers to a display method that combines the θ-direction display and ψ-direction display described above, and such a combined use of θ-direction display and ψ-direction display provides the cross display shown in FIG. 24.

Here, considering a case of measuring only one fan cross section in each of θ-direction and ψ-direction with the highest resolution as shown in FIG. 24, it is equivalent to (P+U)×R directivity synthesis processes. Assuming that U≈P, the processing burden in directivity synthesis is reduced to about 2/P of that of the basic operation, and the imaging limit time in this case is the TFK of FIG. 15 and the imaging rate is comparable with that of the basic operation.

Here, rotation cross display, which is rotated about an axis OO_{XY} at which the two fan cross sections in FIG. 24 intersect each other, is also possible by arranging a rotation angle setting device. This rotation cross display is also equivalent to (P+U)×R directivity synthesis processes, in which case the imaging limit time is also the TFK in FIG. 15 and the operation is similar to that in the cross display.

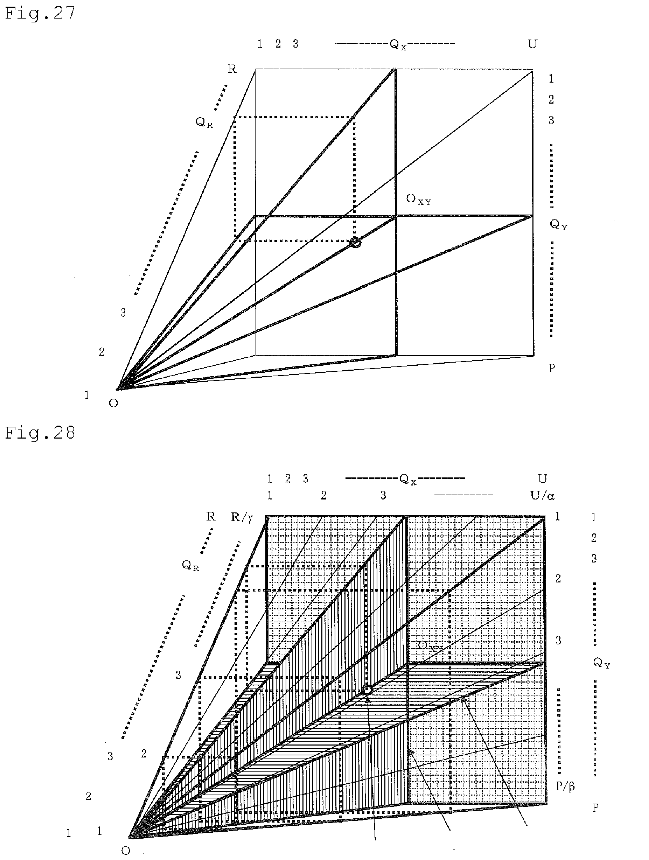

Here, an operation of displaying only the cross section position and not displaying reflected signal information for each cross section in FIG. 24 corresponds to selecting the axis OO_{XY} by setting of an azimuth of interest Q_{X} in θ-direction and an azimuth of interest Q_{Y} in ψ-direction. By further adding a device for selecting a specific distance U_{R}, a certain position Q_{XYR} (Q_{X}, Q_{Y}, Q_{R}) in a three-dimensional space is selected, which is used as a cursor display diagram (FIG. 27) by arranging an input device for setting the three variables Q_{X}, Q_{Y}, Q_{R}, enabling the selection of a certain position.

Known input devices for selecting two variables in one pass include a joystick, a track ball, and the like.

By further arranging an input device for setting the position U_{R} in the distance direction as a third variable, a certain position Q_{XYR} (Q_{X}, Q_{Y}, Q_{R}) in the three-dimensional space can be selected.

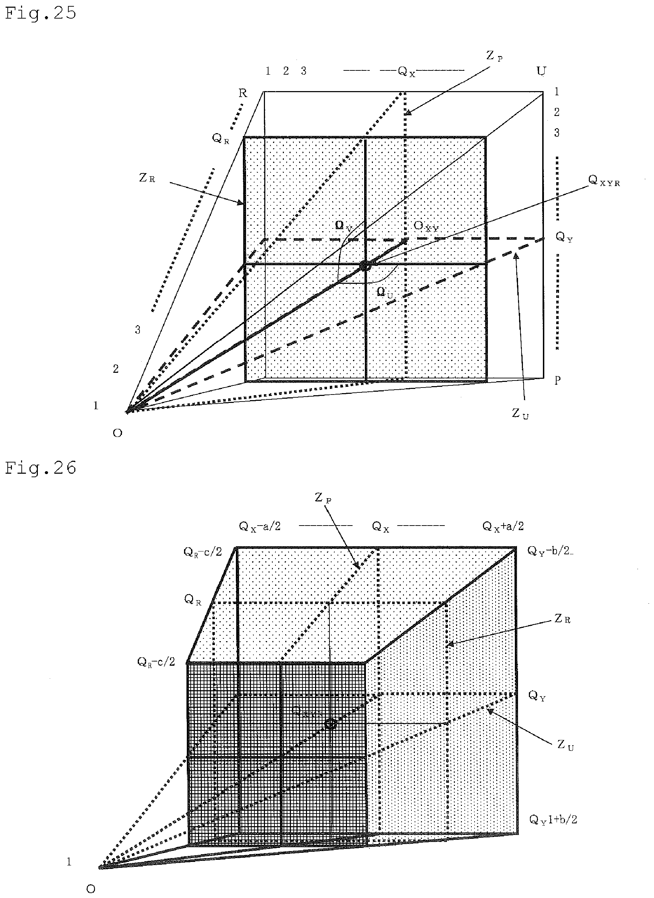

Also, when focusing on the specific distance U_{R} and selecting a certain position Q_{XYR} (Q_{X}, Q_{Y}, Q_{R}) in the three-dimensional space with a cursor operation and displaying one cross section Z_{R} intersecting the axis OO_{XY} as depth gate display as shown in FIG. 25, this display is equivalent to (P+U) directivity synthesis processes. Assuming that U≈P, the processing burden in directivity synthesis is reduced to about 2P of that of the basic operation, in which case the imaging limit time is also the TFK in FIG. 15 and the imaging limit rate is comparable with that of the basic operation.

Rotation depth gate display is also possible by setting the angles Ω_{U} and Ω_{V} in FIG. 25 with an input device so as to display a certain cross section that intersects the axis OO_{XY}. This case also represents (P+U) directivity synthesis processes, and assuming that U≈P, the processing burden in directivity synthesis is reduced to about 2P of that of the basic operation. In this case, the imaging limit time is again the TFK in FIG. 15 and the imaging limit rate is comparable with that of the basic operation.

It is also possible to create multiple depth gate display for arranging multiple cross sections Z_{R} (N_{ZR}) in the depth gate display shown in FIG. 25. Such a multiple depth gate display is equivalent to (P+U) × N_{ZR} directivity synthesis processes, in which case the burden increases to N_{ZR} times that in the depth gate display, but the imaging limit time is the TFK in FIG. 15 and the imaging limit rate is comparable with that of the basic operation.

As the display method, partial data display 8: region-of-interest display and region volume may also be employed. Here, when setting the region of interest as shown in FIG. 26 and limiting the observation regions in the θ-direction, the ψ-direction, and the distance direction to points a, b, and c, respectively, the number of directivity synthesis processes for measuring information on the observation points will be (a×b×c) / (U×P×R). Assuming that a=U/3, b=P/3, and c=R/3, the processing burden can be reduced to 1/27, and three-dimensional measurement is enabled while maintaining the field of view in the three-dimensional directions and the imaging time (=TFK).

Here, if "a" in the region of interest is within the maximum number of radiation directions Uw, the imaging limit time in sound wave propagation remains the time for single transmission and reception TF1(=TFK/K), enabling ultrafast imaging.

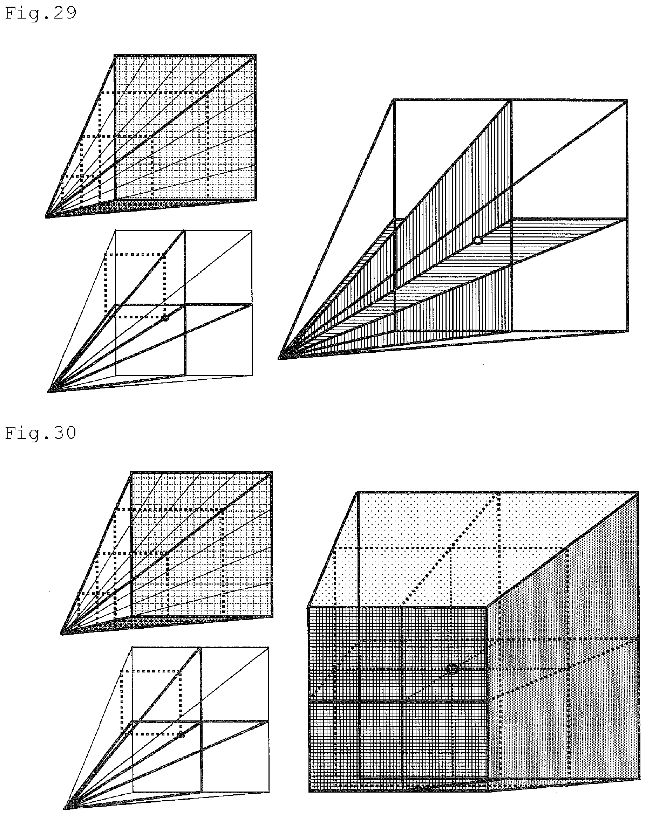

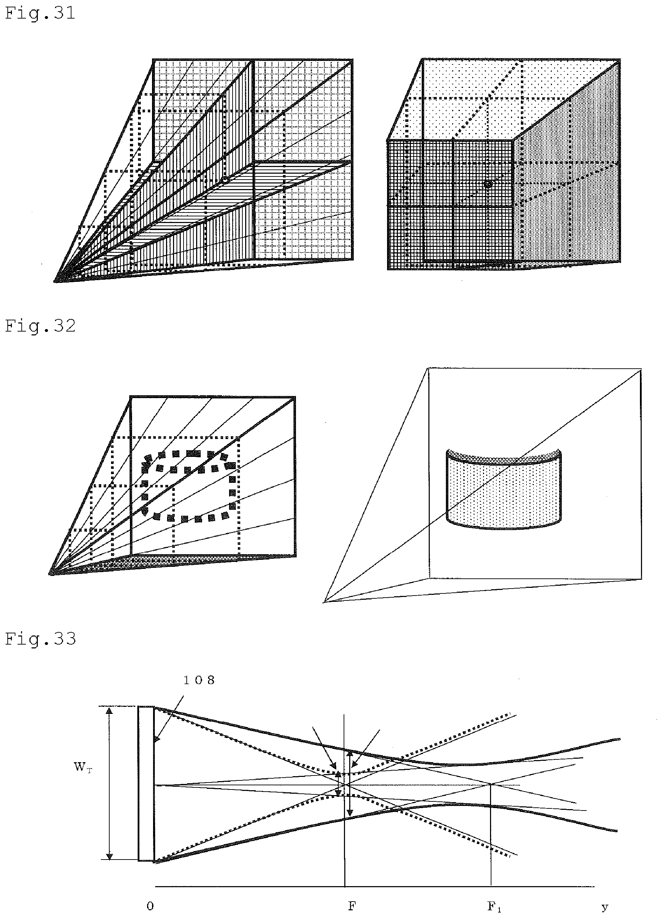

Since the low-resolution display and various kinds of partial data display described above are of low processing burden, combined display of the various display methods can be configured as desired without significant increase in the processing ability: such as double superposed display combining low-resolution display and cross display shown in FIG. 28, triple juxtaposed display combining low-resolution display, cursor display, and cross display shown in FIG. 29, triple juxtaposed display combining low-resolution display, cursor display, and region-of-interest display shown in FIG. 30, or triple composite display combining the double superposed display of low-resolution display and cross display with the region-of-interest display shown in FIG. 31.

Also, in the depth gate display in which the specific distance U_{R} is focused and a certain position Q_{XYR} (Q_{X}, Q_{Y}, Q_{R}) in the three-dimensional space is selected as shown in FIG. 25, by setting the specific distance U_{R} as a distance at which a first strong signal reaches in each direction of low-resolution display, it is possible to use automatic depth gate display in which a target surface is displayed in high resolution as shown in FIG. 32.

This automatic depth gate display involves an imaging limit time and an imaging limit rate comparable with those of the regular depth gate display.

The low-resolution display and various kinds of partial data display described above are not limited to coordinates locked to an apparatus but can be converted to global coordinate display by utilizing data on a navigation apparatus and displayed.

The various kinds of partial data display described above are effectively utilized particularly in combination of low-resolution display, which enables continuous observation of a wide region.

In the low-resolution display and various kinds of partial data display described above, there can be a case where some signals are identical in either type of display, in which case those signals may be shared to improve the imaging rate.

For combined use of the various kinds of high-resolution partial data display and low-resolution display described above, it is essential to have a transmitter with high resolution ability.

It is uneconomical to add a transmitter with low resolution ability in a configuration including a transmitter with high resolution ability.

Although transmission of low resolution can be easily produced by reducing the aperture of a transmitter with high resolution ability, this method leads to wasting of part of the transmitter aperture.

Thus, the method shown in FIG. 33 is an approach that uses the whole aperture of a high-resolution transmitter and performs transmission focused at distance F1 when the target distance is F, thereby reducing the resolution to W1.

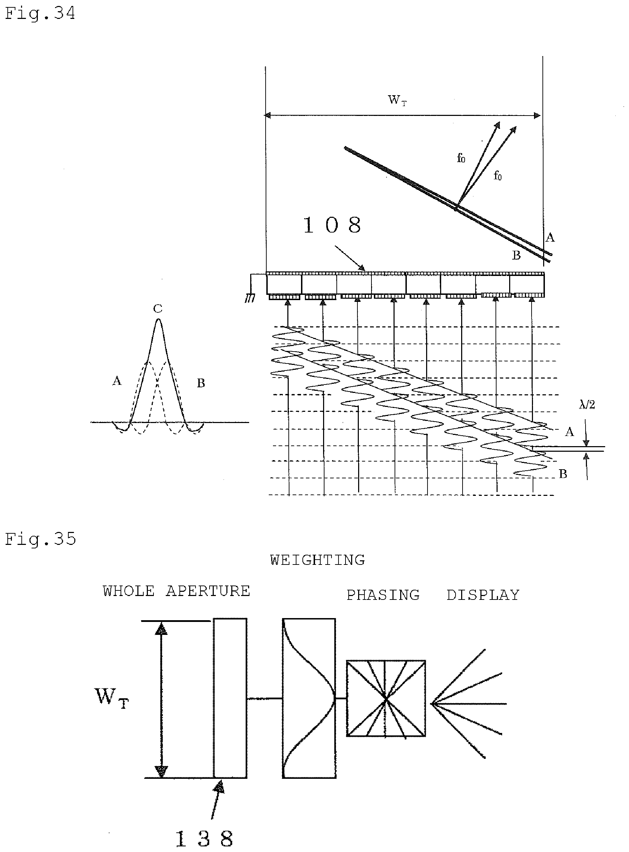

The method shown in FIG. 34 is a method that uses the whole aperture of a high-resolution transmitter to transmit wave fronts of the same frequency as A and B in multiple neighboring directions, thereby widening the transmitted beam as C.

It is uneconomical to add a receiver with low resolution ability in a configuration including a receiver with high resolution ability.

Although transmission of low resolution can be easily produced by reducing the aperture of a receiver with high resolution ability, this method leads to wasting of part of the receiver aperture.

Thus, the method shown in FIG. 35 is a method that applies amplitude weighting to the whole aperture of a high-resolution receiver. When Hanning weighting is applied, for example, the resolution is reduced to 1/2 as intended even using the whole aperture and mitigation of unwanted responses is also achieved.

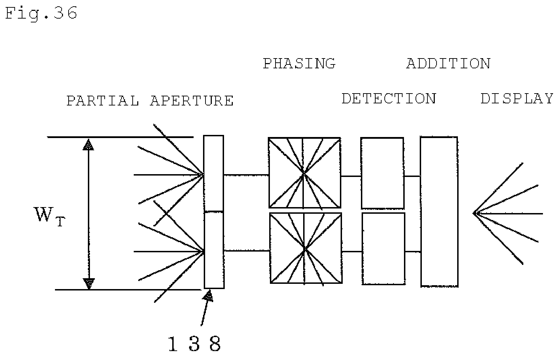

The method shown in FIG. 36 is a method that uses the whole aperture of a high-resolution receiver but with segmentation of the aperture, performs directivity synthesis process on each of the segmented aperture, and detects the result of each directivity synthesis and then adds them. The resolution reduces in proportion with the number of segments (two segments in FIG. 36) as intended even using the whole aperture and suppression of irregular noise is also achieved.

As will be apparent, it is also possible to show the limit resolution display and limit resolution display with a limited target space region in a juxtaposed manner (precision juxtaposed display).

In the case of such a precision juxtaposed display, complete diversion of measurement results is possible by setting the limit resolution display with a limited target space region such that the space region in the transmitter resolution direction is limited.

In this case, resistance to mobility is also significantly improved because a measurement result with a single transmission and reception can be also observed.

### Industrial Applicability

The present invention achieves ultrasonic three-dimensional imaging with high precision by means of a simple apparatus.

### Reference Signs List

8 ... transmitter
9 ... propagation medium
10 ... target region
11 ... two-dimensional converging acoustic lens
12 ... received wave detection surface of one-dimensional arrangement
13 ... fan ultrasound beam
14 ... reflected sound wave
15 ... target object
16 ... segmented element
17 ... object image
18 ... element output signal
19 ... signal frequency component strength
20 ... piezoelectric element
21 ... polarization axis direction
22 ... ground electrode
23 ... signal electrode
24 ... ultrasonic wave front radiation direction
25 ... driving signal
26 ... ultrasonic wave front
27 ... high-frequency outgoing wave front
28 ... low-frequency outgoing wave front
37 ... reception directivity synthesis unit
42 ... signal electrode
43 ... ground electrode
44 ... signal terminal
46 ... emitted wave front
47 ... upper-received wave front
48 ... front-direction received wave front
49 ... delay circuit
50 ... delay time terminal
51 ... received signal
52 ... upper-received output
53 ... front-received output
108 ... transmitter
109 ... filter set
138 ... receiver
156 ... receiving element
201 ... filter
202 ... upper-received filtered output
203 ... front-received filtered output

## Claims

1. An ultrasonic three-dimensional measurement apparatus comprising a transmitter arranged in a one-dimensional direction and a receiver one-dimensionally arranged in a direction orthogonal to an arrangement direction of the transmitter, the transmitter transmitting a plurality of outgoing wave fronts during a single transmission and reception period, wherein a transmitted sound wave has a different frequency depending on an azimuth relative to the transmitter arrangement direction,
wherein the ultrasonic three-dimensional measurement apparatus is adapted so that outgoing wave fronts in vicinity of a front direction orthogonal to the arrangement direction of the transmitter have a high frequency and outgoing wave fronts in marginal directions have a low frequency.

2. An ultrasonic three-dimensional measurement apparatus comprising a transmitter arranged in a one-dimensional direction and a receiver one-dimensionally arranged in a direction orthogonal to an arrangement direction of the transmitter, the transmitter transmitting a plurality of outgoing wave fronts during a single transmission and reception period, wherein a transmitted sound wave has a different frequency depending on an azimuth relative to the transmitter arrangement direction,
wherein transmission is performed in an order that makes the azimuth of the outgoing wave fronts monotonically change.

3. An ultrasonic three-dimensional measurement apparatus comprising a transmitter arranged in a one-dimensional direction and a receiver one-dimensionally arranged in a direction orthogonal to an arrangement direction of the transmitter, the transmitter transmitting a plurality of outgoing wave fronts during a single transmission and reception period, wherein a transmitted sound wave has a different frequency depending on an azimuth relative to the transmitter arrangement direction,
wherein a total number of outgoing wave fronts that are transmitted in a single transmission and reception period is varied in accordance with a frequency band of the transmitter and a frequency spectrum of a transmitted signal.

4. An ultrasonic three-dimensional measurement apparatus comprising a transmitter arranged in a one-dimensional direction and a receiver one-dimensionally arranged in a direction orthogonal to an arrangement direction of the transmitter, the transmitter transmitting a plurality of outgoing wave fronts during a single transmission and reception period, wherein a transmitted sound wave has a different frequency depending on an azimuth relative to the transmitter arrangement direction,
wherein frequency component separation is performed after performing a reception directivity synthesis process on a received wave signal.

5. An ultrasonic three-dimensional measurement apparatus comprising a transmitter arranged in a one-dimensional direction and a receiver one-dimensionally arranged in a direction orthogonal to an arrangement direction of the transmitter, the transmitter transmitting a plurality of outgoing wave fronts during a single transmission and reception period, wherein a transmitted sound wave has a different frequency depending on an azimuth relative to the transmitter arrangement direction,
wherein frequency component separation on a received wave signal is performed first and then reception directivity synthesis is performed.

6. An ultrasonic three-dimensional measurement apparatus comprising a transmitter arranged in a one-dimensional direction and a receiver one-dimensionally arranged in a direction orthogonal to an arrangement direction of the transmitter, the transmitter transmitting a plurality of outgoing wave fronts during a single transmission and reception period, wherein a transmitted sound wave has a different frequency depending on an azimuth relative to the transmitter arrangement direction,
wherein low-resolution display is performed.

7. An ultrasonic three-dimensional measurement apparatus comprising a transmitter arranged in a one-dimensional direction and a receiver one-dimensionally arranged in a direction orthogonal to an arrangement direction of the transmitter, the transmitter transmitting a plurality of outgoing wave fronts during a single transmission and reception period, wherein a transmitted sound wave has a different frequency depending on an azimuth relative to the transmitter arrangement direction,
wherein limit resolution display with a limited target space region is performed.

8. The ultrasonic three-dimensional measurement apparatus according to Claim 7, wherein the limit resolution display with a limited target space region limits a space region in a transmitter resolution direction.

9. The ultrasonic three-dimensional measurement apparatus according to Claim 7, wherein the limit resolution display with a limited target space region limits a space region in a receiver resolution direction.

10. The ultrasonic three-dimensional measurement apparatus according to Claim 7, wherein the limit resolution display with a limited target space region limits space regions in a transmitter resolution direction and in a receiver resolution direction simultaneously.

11. The ultrasonic three-dimensional measurement apparatus according to Claim 10, wherein a limited region for display is rotated about an axis defined by a region of intersection between the limited space regions in the transmitter resolution direction and in the receiver resolution direction.

12. The ultrasonic three-dimensional measurement apparatus according to Claim 10, wherein the limit resolution display with a limited target space region displays only a cross section position and comprises a device for selecting a specific distance.

13. The ultrasonic three-dimensional measurement apparatus according to Claim 7, wherein the limit resolution display with a limited target space region focuses on a specific distance and comprises a device for limiting the space region in a distance direction.

14. The ultrasonic three-dimensional measurement apparatus according to Claim 7, wherein the limit resolution display with a limited target space region limits regions in all of a transmitter resolution direction, a receiver resolution direction, and a distance direction.

15. The ultrasonic three-dimensional measurement apparatus according to Claim 6, wherein limit resolution display with a limited target space region is displayed in a juxtaposed manner.

16. The ultrasonic three-dimensional measurement apparatus according to Claim 13, wherein the device for limiting the space region in the distance direction is determined by measurement signal conditions for each direction of low-resolution display.

17. The ultrasonic three-dimensional measurement apparatus according to Claim 8, wherein the limit resolution display with a limited target space region limits the space region in the transmitter resolution direction to only a single outgoing wave front direction.

18. The ultrasonic three-dimensional measurement apparatus according to Claim 15, wherein the ultrasonic three-dimensional measurement apparatus is adapted to achieve low-resolution display without narrowing apertures of the transmitter and the receiver.

19. An ultrasonic apparatus comprising a transmitter arranged in a one-dimensional direction, the transmitter transmitting a plurality of outgoing wave fronts during a single transmission and reception period and being adapted so that a transmitted sound wave has a different frequency depending on an azimuth relative to a transmitter arrangement direction, wherein frequencies of the outgoing wave fronts are adapted so that high frequency components are radiated in a near-front direction and low frequency components are radiated in marginal directions.

20. The ultrasonic apparatus according to Claim 19, wherein the ultrasonic apparatus is adapted so that azimuths of wave fronts that are transmitted in a single transmission period are limited to a single azimuth direction among all azimuth directions on a front side of the transmitter with respect to a specific driving signal frequency.

21. The ultrasonic apparatus according to Claim 19, wherein the transmitter transmits the wave fronts in an order that makes the wave fronts change monotonically.

22. The ultrasonic three-dimensional measurement apparatus according to Claim 15, wherein the ultrasonic three-dimensional measurement apparatus is adapted so that limit resolution display with a limited target space region is displayed as being expanded relatively to low-resolution display.

23. The ultrasonic three-dimensional measurement apparatus according to Claim 1, wherein limit resolution display with a limited target space region is displayed in a juxtaposed manner.

24. The ultrasonic three-dimensional measurement apparatus according to Claim 23, wherein the limit resolution display with a limited target space region limits a space region in a transmitter resolution direction.
